# EUROPEAN PATENT APPLICATION

(11) **EP 2 154 843 A1**
(43) Date of publication of application: **17.02.2010**
(21) Application number: 08764574.3
(22) Date of filing: 23.05.2008
(51) Int. Cl.: H04L 12/56

(54) **COMMUNICATION SYSTEM**

(30) Priority: 31.05.2007 JP 2007145096
(71) Applicant: Sanden Corporation, Isesaki-shi, Gunma 372-8502 (JP)
(72) Inventor: SUGA, Masakazu, Isesaki-shi Gunma 372-8502 (JP)
(74) Representative: Haley, Stephen
(86) International application number: PCT/JP2008/059528
(87) International publication number: WO 2008/149692

(57) **Abstract**

A connection adapter (1) is disposed intervening between a communication module (20) for connection to a radio packet communication network (40) and high-level equipment (10). The connection adapter (1) transmits a communication request for second high level equipment (10b) to a management computer (51) after connecting to the radio packet communication network 40. The management computer (51) sends a calling message to second connection adapter (1b). Upon receipt of the calling message, the second connection adapter (1b) connects to the radio packet communication network (40). Then, each of the connection adapter (1a, 1b) relay the communication between the high-level equipments (10a, 10b).

## Description

### TECHNICAL FIELD

The present invention relates to a communication system for use in the field of telemetering used for such purposes as collection of sales information from vending machines or the field of telematics used for distribution of traffic information to mobile objects and like purposes.

### BACKGROUND ART

Recently, telemetring and telematics for collecting and distributing information over a radio packet communication network have become widespread. The telemetring originally refers to a system of reading a measured value by a measure via a communication line. However, it has been generally used as a term indicating not only reading data but also monitoring the operation of equipment and performing remote control. A typical application of telemetring can be a sales management system of a vending machine, use amount management system of a gas, water supply, etc., and a management system for unmanned parking lots, etc. For a sales management system of a vending machine, refer to the patent document 1. The telematics refers to providing information service in real time by combining a mobile object such as an automobile with a communication system. A typical application of telematics can be a vehicle-mounted information system etc. for providing a terminal provided for a vehicle with traffic information and navigation information in real time.

In such fields, a user in a remote location would require a communication device for connection to the radio pack communication network and high-level equipment using the communication device. The high-level equipment corresponds to DTE (Data Terminal Equipment), and the communication device corresponds to DCE (Data Circuit-terminating Equipment).

In the sales management system for a vending machine, for instance, the control equipment which regulates selling actions and the inside temperature correspond to the high-level equipment. Each of high-level equipment connects to a predetermined network via a communication device regularly or at random timing, and connects to a predetermined management computer via the network. The high-level equipment connected to the management computer transmits various sets of data on the objects to be controlled.
PATENT DOCUMENT 1: Japanese Patent Publication 2003-51056

### DISCLOSURE OF THE INVENTION

### PROBLEMS TO BE SOLVED BY THE INVENTION

In conventional systems, a destination of the communication with the high-level equipment is only a server such as the management computer. But there is a demand for communication between the high-level equipments. However, whether or not one high-level equipment can connect to the other high-level equipment depends upon specifications and services of the radio packet communication network. Accordingly it is difficult to achieve the above demand.

In view of the above problems in the conventional art, the present invention has an object to provide a communication system capable of communicating between terminals accommodated in the radio packet communication network.

### MEANS FOR SOLVING THE PROBLEMS

In order to achieve the object stated above, the present application proposes a communication system that utilizes a network connection service which connects a LAN and a radio communication terminal via a radio packet communication network, wherein said radio communication terminal comprises a communication device for connecting to the radio packet communication network, high-level equipment performing communication by using the communication device, and a connection adapter connecting the communication device and the high-level equipment; said connection adapter comprises connection control means for controlling connection of the communication of the high-level equipment and communication control means for controlling relaying communication data of the high-level equipment; a server for managing communication between a first radio communication terminal and a second radio communication terminal is arranged on the LAN side; connection control means of a connection adapter of the first radio communication terminal, in case of communicating to the second radio communication terminal accommodated in the radio packet communication network, connects to the radio packet communication network and sends a communication request for the second radio communication terminal to the server; upon receipt of the communication request, a communication management means of the server sends a calling message to the second communication terminal by using a messaging service provided in the radio packet communication network; upon receipt of the calling message from the server, a connection control means of a connection adapter of the second radio communication terminal connects to the radio packet communication network.

According to the invention, if the first radio communication terminal sends the communication request, the calling message is sent to the second radio communication terminal from the server. Then, upon receipt of the calling message, the connection control means of the connection adapter of the second radio communication terminal connects to the radio packet communication network. This provides that a status of the first and second radio communication terminal turns to online; therefore communication between both terminals will be enabled.

The high-level equipment corresponds to DTE (Data Terminal Equipment), and the communication device corresponds to DCE (Data Circuit-terminating Equipment).

The present application also proposes the communication system, wherein said calling message includes address information of the first radio communication terminal, the connection controller of the connection adapter of the second radio communication establishes the connection to the first radio communication terminal based on the address information included the calling message, and then perform peer-to-peer communication between the first and second radio communication terminals.

The present application also proposes the communication system, wherein the connection control means of the connection adapter of the first radio communication terminal establishes connection to the server via the radio packet communication network after the connection to the radio packet communication network; the connection control means of the connection adapter of the second radio communication terminal establishes connection to the server via the radio packet communication network after the connection to the radio packet communication network upon the receipt of the calling message; the communication management means of the server relays communication data between the first and second radio communication terminals.

### ADVANTAGES OF THE INVENTION

As described above, according to the present invention, if the first radio communication terminal sends the communication request, the calling message is sent to the second radio communication terminal from the server. Then, upon receipt of the calling message, the connection control means of the connection adapter of the second radio communication terminal connects to the radio packet communication network. This provides that the status of the first and second radio communication terminal turns to online; therefore communication between both terminals will be enabled.

### BRIEF DESCRIPTION OF THE DRAWINGS

Fig. 1 shows a configuration view of a communication system;
Fig. 2 shows an outline drawing of a connection adapter;
Fig. 3 shows a block diagram of the connection adapter;
Fig. 4 illustrates an example of setting information in the connection adapter;
Fig. 5 illustrates an example of setting information in the connection adapter;
Fig. 6 illustrates the sequence of the communication starting from high-level equipment;
Fig. 7 illustrates address conversion processing;
Fig. 8 illustrates the sequence of the communication starting from a management computer;
Fig. 9 illustrates address conversion processing;
Fig. 10 illustrates the sequence of the communication starting from the high-level equipment;
Fig. 11 illustrates address conversion processing;
Fig. 12 illustrates the sequence of the communication between the high-level equipments;
Fig. 13 illustrates the sequence of the communication between the high-level equipments.

### DESCRIPTION OF SYMBOLS

- 1, 1a, 1b: connection adapter
- 121: connection controller
- 122: communication controller
- 10, 10a, 10b: high-level equipment
- 20, 20a, 20b: communication module
- 40: radio packet communication network
- 42: messaging server
- 43: address management server
- 50: in-house LAN
- 51: management computer
- 55: communication manager
- 60: network router

### BEST MODE FOR CARRYING OUT THE INVENTION

### (First Embodiment)

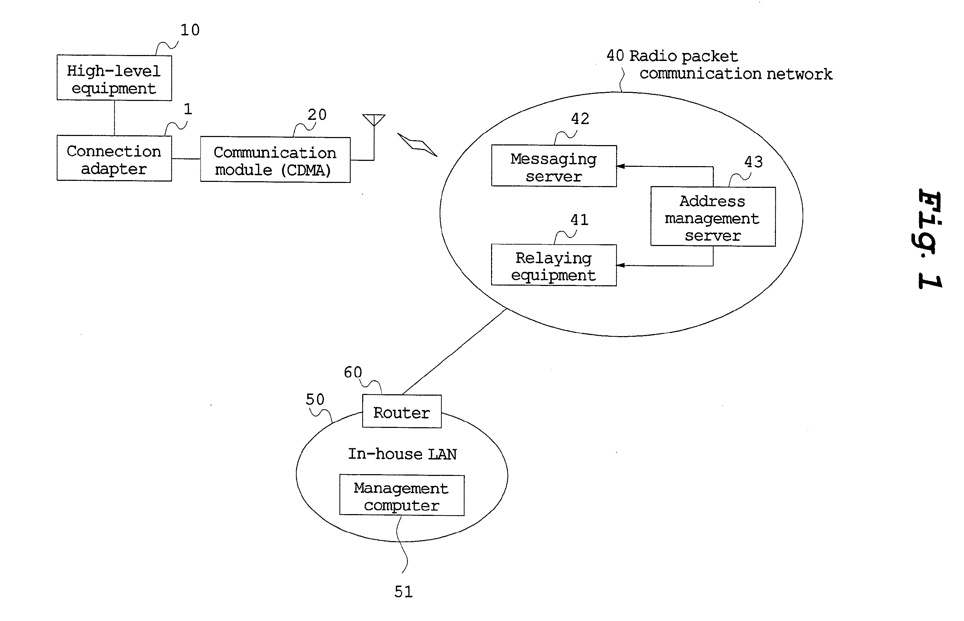

A communication system, which is a first embodiment of the present invention, will be described with reference to accompanying drawings. Fig. 1 shows the configuration of a telemetering system using the communication system according to the invention.

This system provides, as shown in Fig. 1, a network environment which connects high-level equipment 10, which may be a computer for sewage flow rate monitoring for instance, and an in-house LAN 50 via a radio packet communication network 40.

It is supposed here that the high-level equipment 10 and a terminal in the in-house LAN 50 (a management computer 51 in Fig. 1) are set for use by a network connection service which assigns IP addresses in a fixed manner. On the other hand, the radio packet communication network 40 is supposed to provide another network service which assigns IP addresses dynamically. According to the invention disclosed by the present application, a connection adapter 1 is arranged to intervene between the high-level equipment 10 and a communication module 20, and this connection adapter 1 absorbs differences in the network environment. A set of the high-level equipment 10, the connection adapter 1 and the communication module 20 corresponds to one radio communication terminal in the radio packet communication network 40.

The high-level equipment 10 corresponds to DTE (Data Terminal Equipment). This high-level equipment 10 is designed to match a specific carrier and a network connection service provided by that carrier. More specifically, it presupposes the use of a network connection service which assigns a fixed IP address to each connection terminal. The high-level equipment 10 is also designed to be connected to a communication module matching the service and to match a connection protocol, an authentication protocol and the like matching that service.

The network connection service which the high-level equipment 10 in this configuration presupposes will be described. In this network connection service, a telephone number is allocated in advance to each communication module by the carrier. The radio packet communication network provided by this network connection service is provided with relaying equipment which performs connection control, packet relaying and so forth. To the relaying equipment, a telephone number is allocated, corresponding to an in-house LAN which is the network to be connected to. When a call is initiated to the telephone number of the relaying equipment within the radio packet communication network, the terminal having the communication module is connected to a predetermined network, such as an in-house LAN. Connection to the relaying equipment is permitted only from a communication module to which a telephone number is allocated in advance.

The present invention presupposes the use of such high-level equipment 10 and the management computer 51 as they are, and allows architecting of a network system even in the radio packet communication network 40 in which the network connection service assigning dynamic IP addresses is provided.

Next, the network connection service which assigns dynamic IP addresses and is used in this embodiment of the invention will be described. In this network connection service, a telephone number is allocated to the communication module 20 in advance by the carrier. In this radio packet communication network 40, as shown in Fig. 1, there is provided relaying equipment 41 which performs connection control, packet relaying and so forth. The terminal having the communication module 20 is connected to the radio packet communication network 40 by designating a predetermined special number and initiating a call to that number. This terminal is made connectable to the in-house LAN 50, the network to which it is to be connected, by performing authentication processing with the relaying equipment 41 using PAP (Password Authentication Protocol). In the PAP authentication, the network to be connected to is specified by including a user name which specifies the destination of connection. In this network connection service, a group of IP addresses in a predetermined range are allocated by the carrier to the radio packet communication network 40. An IP address included in the group of IP addresses is dynamically allocated to the communication module 20 by IPCP (Internet Protocol Control Protocol).

The IP address assigned to the connection terminal here is a predetermined one. As shown in Fig. 1, an address management server 43 is disposed in the radio packet communication network 40. This address management server 43 manages a list of the telephone numbers of connection terminals and IP addresses to be distributed to the terminals having those telephone numbers. The address management server 43 is provided with an address matching table stating the relationship of matching between the telephone numbers and the IP addresses. This address management server 43 also provides users with interfaces for updating the address matching table.

In this connection service, the radio packet communication network 40, when a terminal comes into connection, acquires a telephone number of that connection terminal. Then it acquires an IP address matching that telephone number from the address matching table, and distributes the acquired IP address to the connection terminal. This address distribution uses the IPCP mentioned above. Thus in this embodiment, though it uses the IPCP which is a dynamic IP assigning technique, the IP address distributed is a predetermined one.

Further in this connection service, the radio packet communication network 40 receives from the in-house LAN 50 an IP packet destined for the IP address matching the terminal and, when that terminal is not connected to the radio packet communication network 40, a messaging server 42 transmits a message. More specifically, the messaging server 42 acquires from the address management server 43 a telephone number matching the received IP packet, and transmits the message to that telephone number. This messaging service is not a network connection service using TCP/IP, but is implemented by a unique protocol using the radio communication network. This enables the terminal to recognize the receipt of a connection request from the in-house LAN 50.

Next, the connection adapter 1 will be described in detail. This connection adapter 1 is intended to connect the high-level equipment 10 corresponding to Data Terminal Equipment and the communication module 20 corresponding to DCE (Data Circuit-terminating Equipment). The connection adapter 1 in this embodiment, it matches the communication module 20 of the CDMA (Code Division Multiple Access) standards. The communication module 20 is a communication device to be connected to the radio packet communication network 40 built by a carrier, and matches the communication standards and the communication protocol service determined by the carrier on its own. The high-level equipment 10, as stated above, is designed to match a specific carrier and the service provided by that carrier. More specifically, it is designed to accept the connection of a communication module matching that service and to be compatible with a connection protocol, an authentication protocol and the like matching that service.

The high-level equipment 10 pertaining to this embodiment is supposed to permit direct connection to a communication module of the PDC (Personal Digital Cellular) standards and a communication module of the PHS (Personal Handy-phone System) standards. It is further supposed to be made connectable to the in-house LAN 50 via each radio packet communication network by using these communication modules. The connection adapter 1 of this embodiment is made connectable to the in-house LAN 50 via the radio packet communication network 40 by using the communication module 20 of the CDMA standards without requiring remodeling or altering the high-level equipment 10. The connection adapter 1 will be described in further detail below.

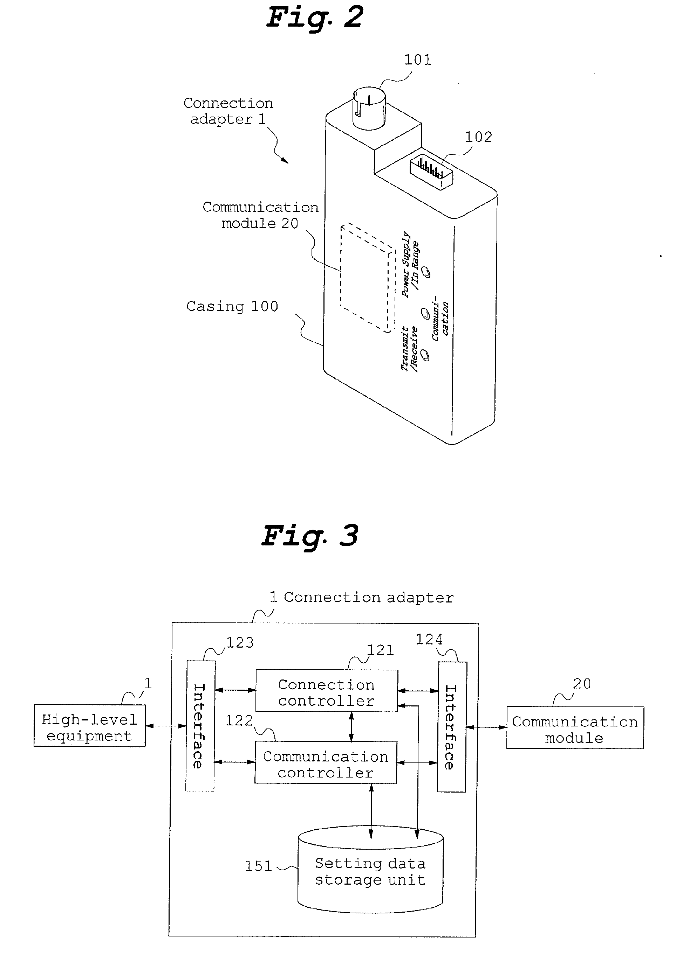

A configurative diagram of the connection adapter 1 of this embodiment of the invention will be described with reference to Fig. 2 and Fig. 3. Fig. 2 is outline drawing of the connection adapter 1. Fig. 3 is a functional block diagram of the connection adapter 1. Only those configurative elements relevant to the essentials of the invention are stated in Fig. 3, with other elements omitted.

As shown in Fig. 2, the connection adapter 1 contains the connection module 20 detachable in a box-shaped casing 100. A connector 101 for connecting to an antenna and a connector 102 for connecting to the high-level equipment 10 are installed on end face of the casing 100.

As shown in Fig. 3, the connection adapter 1 is provided with a connection controller 121 for performing connection control such as establishment of line connection, a communication controller 122 for controlling data communication over a connection established by the connection controller 121, an interface 123 for interfacing with the high-level equipment 10, an interface 124 for interfacing with the communication module 20, a setting data storage unit 151 in which various setting data are stored and a packet temporary storage unit 152 for temporarily storing packets. The connection controller 121 performs line connection control by AT commands, IP layer connection control by LCP (Link Control Protocol) and IPCP and a connection control for a peer-to-peer communication to other radio communication terminal. The communication controller 122 performs processing of conversion of IP addresses contained in the headers of the IP layer, processing of proxy responses regarding TCP packets and so forth in data communication over the connection established by the connection controller 121.

The connection controller 121 and the communication controller 122 subject data between the high-level equipment 10 and the communication module 20 to conversion, transmission, discarding and other manners of processing in accordance with predetermined rules. The data necessary for these manners of data processing are stored in the setting data storage unit 151.

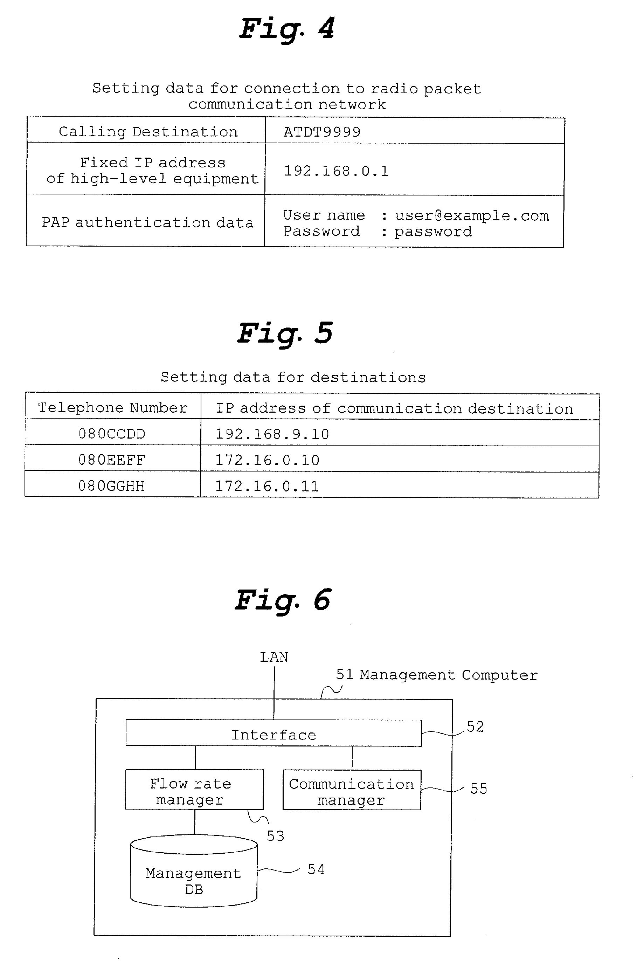

The data stored in the setting data storage unit 151 will be described with reference to Fig. 4 and Fig. 5. Fig 4 is an example of connection configuration data required for connection to the radio packet communication network 40. As shown in Fig. 4, the setting data storage unit 151 stores, as the connection configuration data, an initiation command (including telephone number) for connecting to the radio packet communication network 40, the fixed IP address of the high-level equipment 10, authentication data to be needed at the time of connecting to the radio packet communication network 40. And the setting data storage unit 151, as shown in Fig. 5, stores setting data consisting of a list of IP addresses associating to a connection request from the high-level equipment 10. The setting data, as shown in Fig. 5, consists of a set of a telephone number, which is included in the initiation command (ATDT command) of the high-level equipment 10, and an IP address associated to the telephone number. The setting data includes at least information about the management computer 51. And the setting data, if necessary, includes information about other radio communication terminal intending to perform peer-to-peer communication. The setting data storage unit 151 is formed of a nonvolatile memory, such as an EPROM for instance.

Next, the management computer 51 will be described with reference to Fig. 6. As shown in Fig. 6, the management computer 51 comprises an interface 52 for interfacing with the in-house LAN 50, a flow rate manager 53 for managing a flow rate observed by the high-level equipment 10, a management database 54 for storing and managing the flow rate data, and a communication manager 55 for managing peer-to-peer communication between a pair of the high-level equipment 10. Although functions of flow rate management and communication management are implemented in one management computer 51 in this embodiment, but each function can be implemented in different server. It depends on the implementation which of the flow rate manager 53 or the communication manager 55 deals with received data from the high-level equipment 10. For example, it depends on the method of data reception or the method of adding a data type to received data. In this embodiment, TCP/IP protocol is used on the communication between the high-level equipment 10 and the management computer 51. Accordingly different port number is assigned to the flow rate manager 53 and the communication manager 55.

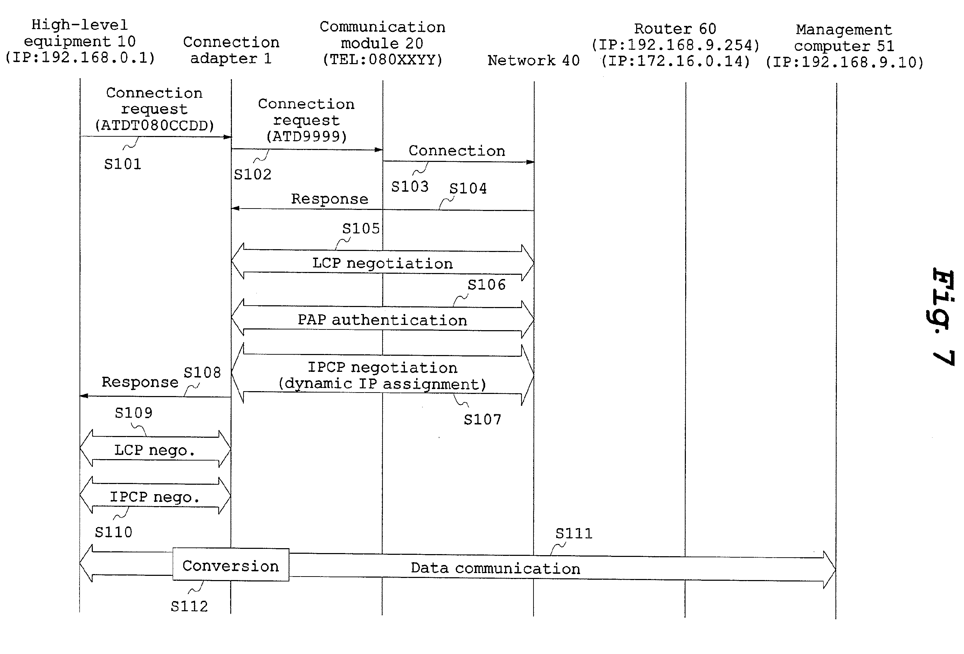

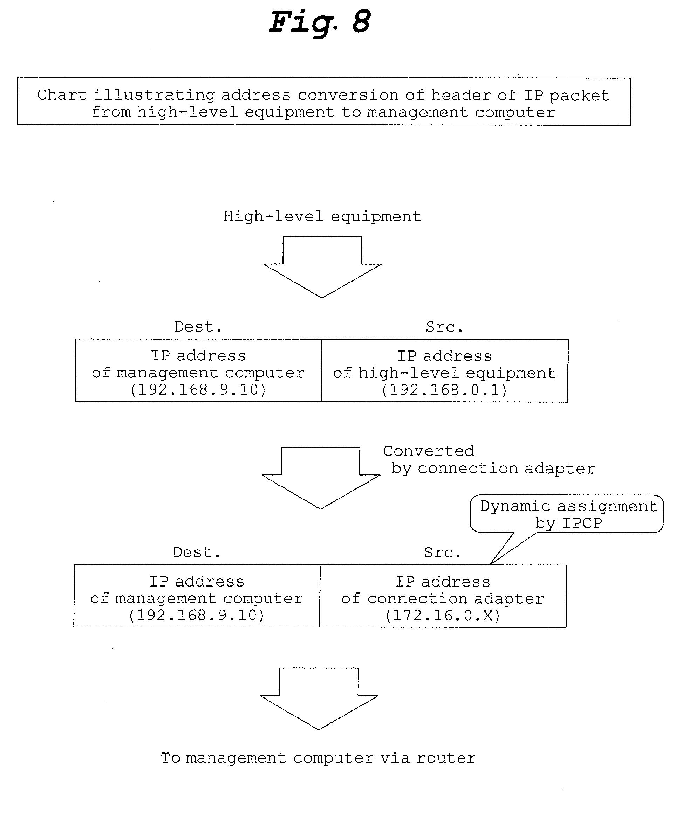

Next, the communication procedure in this system will be described with reference to drawings. First, a case of starting communication from the high-level equipment 10 to the management computer 51 will be described with reference to Fig. 7 and Fig. 8. Fig. 7 is a sequence chart of a case of starting communication from the high-level equipment to the management computer, and Fig. 8 illustrates the conversion process of an IP address stated in the header of an IP packet transmitted from the high-level equipment.

As shown in Fig. 7, when the high-level equipment 10 initiates a call to the connection adapter 1 with an "ATDT080CCDD" command (step S101), the connection controller 121 of the connection adapter 1 converts the command into "AT9999" and transfers it to the communication module 20 (step S102). This call initiation may be triggered by, for instance, the generation of an IP packet having a destination address of 192.168.9.10 as shown in Fig. 8. The AT command causes the communication module 20 to initiate a call to the relaying equipment 41 in the radio packet communication network 40 (step S103). The connection controller 121 of the connection adapter 1, upon receiving a response "CONNECT" to the effect that connection has been completed at the line level via the communication module 20 (step S104), starts processing to connect the connection adapter 1 to the in-house LAN 50 by PPP (Point-to-Point Protocol).

First, the connection controller 121 of the connection adapter 1 starts an LCP negotiation with the relaying equipment 41 of the radio packet communication network 40 (step S105). Next, the connection controller 121 of the connection adapter 1 processes PAP authentication with the relaying equipment 41 of the radio packet communication network 40 (step S106). This PAP authentication, though it is not supposed for the high-level equipment 10, is required when the radio packet communication network 40 pertaining to this embodiment is to be used. Therefore in this embodiment, the connection adapter 1 performs this authentication on behalf of the high-level equipment 10. Upon completion of this authentication processing, the connection controller 121 of the connection adapter 1 starts an IPCP negotiation with the relaying equipment 41 of the radio packet communication network 40 (step S107). This results in completion of the IPCP negotiation, and a dynamic IP address of 172.16.0.X is assigned to the connection controller 121 of the connection adapter 1 from the radio packet communication network 40. The IP address assigned here is predetermined for the communication module 20, which is a connection terminal. The assigned dynamic IP address is stored into storage means such as an EPROM (not shown).

Upon completion of the PPP negotiation, the connection controller 121 transmits to the high-level equipment 10 a response "CONNECT" to the effect that connection has been completed at the line level (step S108). Having received that response, the high-level equipment 10 starts an LCP negotiation and an IPCP negotiation (steps 109, S110). A point to be noted here is that the connection controller 121 of the connection adapter 1 responds to the high-level equipment 10.

As the foregoing processing completes the connection between the high-level equipment 10 and the in-house LAN 50, the high-level equipment 10 starts data communication to the management computer 51 (step S111). Hereupon, the communication controller 122 of the connection adapter 1 performs address conversion of the header of the IP packet (step S112). More specifically, as shown in Fig. 8, the fixed IP address (192.168.0.1) and the dynamic terminal IP address (172.16.0.X) are converted into each other. This processing makes possible communication with the management computer 51 started from the high-level equipment 10.

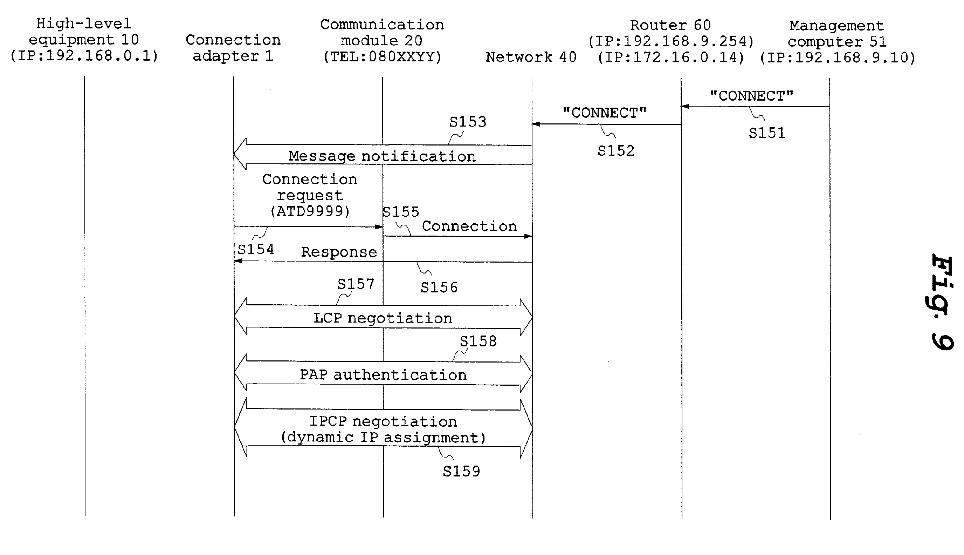

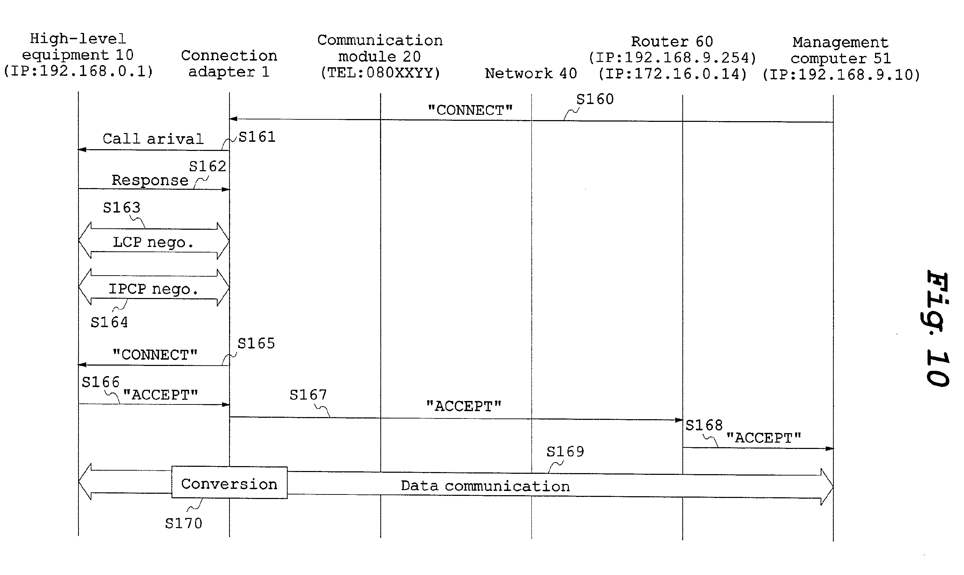

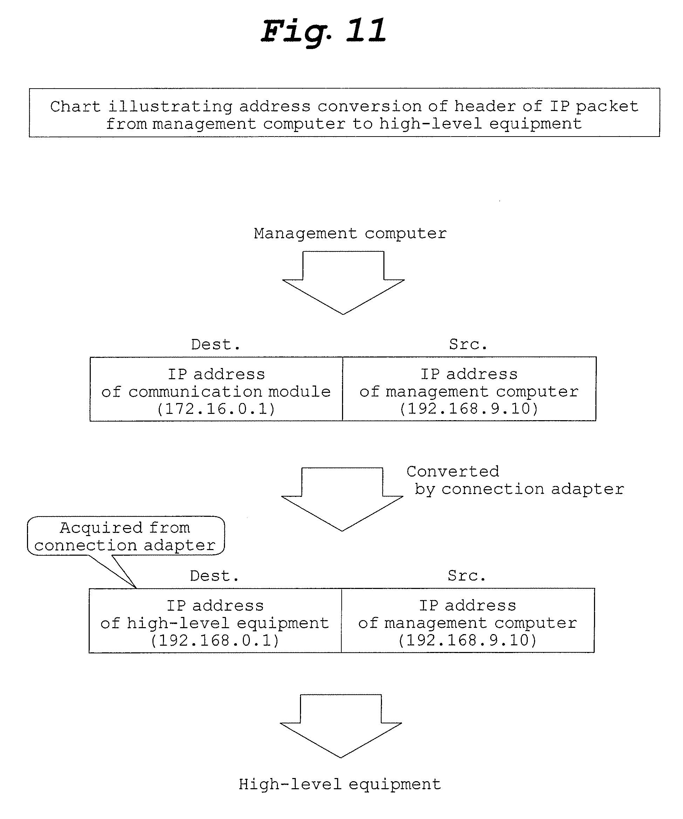

Next, a case in which communication is started from the management computer 51 of the in-house LAN 50 to the high-level equipment 10 will be described with reference to Fig. 9 through Fig. 11. Fig. 9 and Fig. 10 are sequence charts of communication started from the management computer, and Fig. 11 illustrates the process of address conversion.

It is supposed here that the address management server 43 allocates an IP address of "172.16.0.1" to the communication module 20 connected to the high-level equipment 10.

When the management computer 51, in order to communicate with the high-level equipment 10 which is a communication destination, issues a connection request destined for the IP address "172.16.0.1" of the communication module 20 connected to the high-level equipment 10 (step S151), the router 60 relays the packet to the radio packet communication network 40 in accordance with the usual routing rules (step S152).

The radio packet communication network 40 refers to the destination IP address of the packet received from the router 60, and acquires a telephone number matching this IP address from the address management server 43. Then, the radio packet communication network 40 notifies the holder of the telephone number of the receipt of the connection request from the in-house LAN 50 by using a messaging service (step S153). The radio packet communication network 40 discards the packet pertaining to the connection request received from the router 60.

The connection controller 121 of the connection adapter 1 having received the message starts processing of connection to the in-house LAN 50 on the basis of setting data stored in the setting data storage unit 151. More specifically, the connection controller 121 delivers an "ATD9999" command to the communication module 20 (step S154). In response to this AT command, the communication module 20 initiates a call to the relaying equipment 41 of the radio packet communication network 40 (step S155). The connection controller 121 of the connection adapter 1, upon receipt of a response "CONNECT" to the effect that connection has been completed at the line level via the communication module 20 (step S156), starts processing to connect the connection adapter 1 to the in-house LAN 50 by PPP.

First, the connection controller 121 of the connection adapter 1 starts an LCP negotiation with the relaying equipment 41 of the radio packet communication network 40 (step S157). Next, the connection controller 121 of the connection adapter 1 processes PAP authentication with the relaying equipment 41 of the radio packet communication network 40 (step S158). Then, the connection controller 121 of the connection adapter 1 starts an IPCP negotiation between the connection adapter 1 and the relaying equipment 41 of the radio packet communication network 40 (step S159). This results in completion of the IPCP negotiation, and a dynamic IP address of 172.16.0.X is assigned to the connection controller 121 of the connection adapter 1 from the radio packet communication network 40. As stated above, the IP address assigned here is predetermined for the communication module 20, which is a connection terminal. The assigned dynamic IP address is stored into storage means such as an EPROM (not shown).

Upon completion of the PPP negotiation, a connection requesting packet arrives at the connection adapter 1 from the management computer 51 (step S160). As stated above, the radio packet communication network 40 discarded the packet delivered by the management computer 51 at step S151. Therefore, the management computer 51 is unable to receive the response to the connection requesting packet, and retransmits the connection requesting packet owing to a timeout. Since the processing from steps S153 through S159 described above takes some time, some of the retransmitted packets further run into a timeout. Therefore, the connection requesting packet arriving at the connection adapter 1 is the latest among the number of retransmitted packets.

The connection controller 121 of the connection adapter 1, upon receipt of the connection requesting packet from the management computer 51, notifies the high-level equipment 10 of the call arrival (step S161). The high-level equipment 10, upon receipt of the notification of the call arrival, notifies the connection adapter 1 of the response to that notification of the call arrival (step S162), and at the same time starts an LCP negotiation and an IPCP negotiation (steps 163, S164). A point to be noted here is that the connection controller 121 of the connection adapter 1 responds to the high-level equipment 10.

Upon completion of this PPP negotiation, the connection controller 121 of the connection adapter 1 transfers to the high-level equipment 10 the connection requesting packet received from the management computer 51 at step S160 (step S165). Having received the connection requesting packet, the high-level equipment 10 returns the response to the connection adapter 1 (step 166). The connection adapter 1 relays the response packet to the router 60 (step S167). The router 60 relays the response packet to the management computer 51 in accordance with the usual routing rules (step S168).

As the foregoing processing completes the connection between the high-level equipment 10 and the management computer 51, the high-level equipment 10 starts data communication to the management computer 51 (step S169). Hereupon, the communication controller 122 of the connection adapter 1 performs address conversion of the header of the IP packet (step S170). More specifically, as shown in Fig. 11, the fixed terminal IP address (192.168.0.1) and the dynamic terminal IP address (172.16.0.1) are converted into each other.

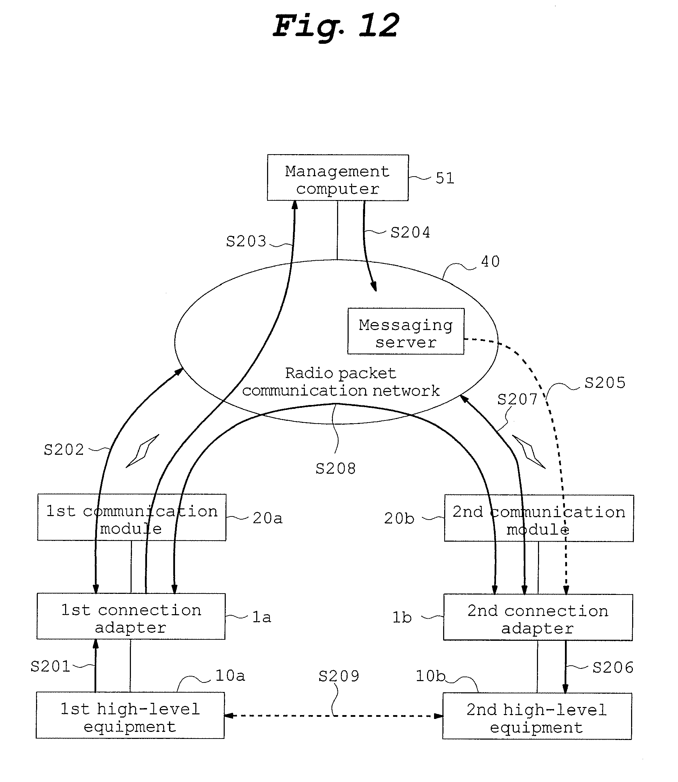

Next, a case of peer-to-peer communication between a first high-level equipment 10a and a second high-level equipment 10b via the radio packet communication network 40 will be described with reference to Fig. 12. It is supposed here that the communication between the high-level equipments 10a and 10b is processed in accordance with so-called "non-procedure" protocol. On the other hand, the radio packet communication network 40 is an IP network. In this embodiment, the TCP connection will be established between a first connection adapter 1a connected to the first high-level equipment 10a and a second connection adapter 1b connected to the second high-level equipment 10b. Then, communication data between the high-level equipments 10a and 10b will be flowed over the TCP connection. A case in which the first high-level equipment 10a connects to the second high-level equipment 10b and perform the peer-to-peer communication will be described below.

As shown in Fig. 12, the first high-level equipment 10a sends an initiation command of a connection request to the connection adapter 1 (step S201). This initiation command includes a telephone number assigned to the second communication module 20b connected to the second high-level equipment 10b. The connection controller 121 of the first connection adapter 1a starts a connection process to the radio packet communication network 40 (step S202). This connection process to the radio packet communication network 40 is the same as the connection process (step S102 to S107) described above referring to Fig. 7. Upon completion of the connection to the radio packet communication network 40, the connection controller 121 of the first connection adapter 1a sends a communication request for the second high-level equipment 10b to the communication manager 55 of the management computer 51(step S203). This communication request includes an IP address of the communication module 20b connected to the second high-level equipment 10b. This IP address is obtained from the setting data of Fig. 5 by using the telephone number as a key. The telephone number is included in the initiation command received from the first high-level equipment 10a on the step S201.

Upon receipt of the communication request from the first connection adapter 1a, the communication manager 55 of the management computer 51 transmits an IP packet to the IP address of the second connection adapter 1b included in the communication request (step S204). This transmission is processed in order to send a message with a messaging service provided by the radio packet communication network 40. Therefore any type of the IP packet can be used. In this embodiment, the communication manager 55 transmits a "PING" to the second connection adapter 1b. As described above, this IP packet will be discarded in the radio packet communication network 40. Upon transmitting the IP packet of the step S204, the messaging server 42 of the radio packet communication network 40 sends a message to the second connection adapter 1b corresponding to the destination of the IP address (step S205). This process of the steps S204 and S205 means sending process of a calling message that the communication manager 55 calls the second connection adapter 1b.

Upon receipt of the calling message, the connection controller 121 of the second connection adapter 1b starts connection process to the radio packet communication network 40 (step S206). This connection process is the same as the connection process (step S102 to S107) described above referring to Fig. 7. Upon completion of the connection process to the radio packet communication network 40, the connection controller 121 of the second connection adapter 1b notifies the second high-level equipment 10b of the call arrival (step S207).

By the said processes, status of the first high-level equipment 10a and the second high-level equipment 10b turns to online on the radio packet communication network 40. Next, the connection controller 121 of the first connection adapter 1a establishes a TCP connection to the second connection adapter 1b (step S208). Then, the each communication controller 122 of the connection adapters 1a and 1b sends datagram received from each of the high-level equipments 10a and 10b onto the TCP connection, and sends datagram which is received from the TCP connection to each of the high-level equipments 10a and 10b. This enables peer-to-peer tunnel communication between the high-level equipments 10a and 10b (step S209).

As described above, the connection adapter 1 of this embodiment makes possible communication using the radio packet communication network 40, which the high-level equipment 10 did not presuppose, without remodeling or altering the high-level equipment 10. Also the connection adapter 1 of this embodiment enables the first high-level equipment 10a to call the second high-level equipment 10b and to communicate each other.

### (Second Embodiment)

A communication system, which is a second embodiment of the present invention, will be described with reference to accompanying drawings. A difference between the first and second embodiments is a communication route between a pair of the high-level equipments 10a and 10b. Other features, effects and advantages are the same as the first embodiment. The differences are described below.

In above first embodiment, the communication between the first and second high-level equipments 10a and 10b is passed over the TCP connection established between the first and second connection adapters 1a and 1b. On the other hand, in this embodiment, TCP connections are established between the first connection adapter 1a and the management computer 51, and between the second connection adapter 1b and the management computer 51. Further, this embodiment is characterized that the communication manager 55 of the management computer 51 relays the communication between the first and second high-level equipments 10a and 10b. Details of the process are described below.

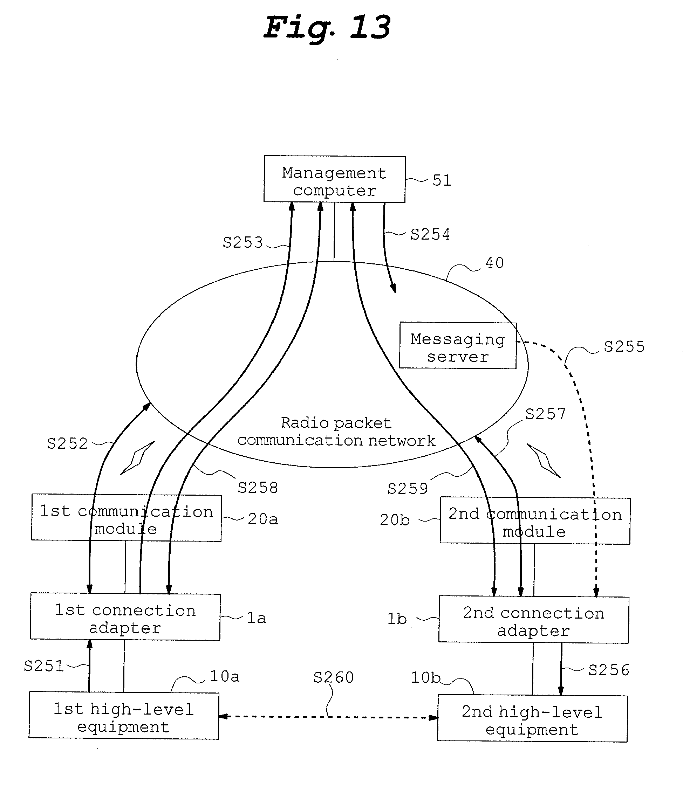

As shown in Fig. 13, the first high-level equipment 10a sends an initiation command of a connection request to the connection adapter 1 (step S251). This initiation command includes a telephone number assigned to the second communication module 20b connected to the second high-level equipment 10b. The connection controller 121 of the first connection adapter 1a starts a connection process to the radio packet communication network 40 (step S252). This connection process to the radio packet communication network 40 is the same as the connection process (step S102 to S107) described above referring to Fig. 7. Upon completion of the connection to the radio packet communication network 40, the connection controller 121 of the first connection adapter 1a sends a communication request for the second high-level equipment 10b to the communication manager 55 of the management computer 51 (step S253). This communication request includes an IP address of the communication module 20b connected to the second high-level equipment 10b. This IP address is obtained from the setting data of Fig. 5 by using a telephone number as a key. The telephone number is included in the initiation command received from the first high-level equipment 10a on the step S251.

Upon receipt of the communication request from the first connection adapter 1a, the communication manager 55 of the management computer 51 transmits an IP packet to the IP address of the second connection adapter 1b included in the communication request (step S254). This transmission is processed in order to send a message with a messaging service provided by the radio packet communication network 40. Therefore any type of the IP packet can be used. In this embodiment, the communication manager 55 transmits a "PING" to the second connection adapter 1b. As described above, this IP packet will be discarded in the radio packet communication network 40. Upon transmitting the IP packet of the step S254, the messaging server 42 of the radio packet communication network 40 sends a message to the second connection adapter 1b corresponding to the destination of the IP address (step S255). This process of the steps S254 and S255 mean a sending process of a calling message that the communication manager 55 calls the second connection adapter 1b.

Upon receipt of the calling message, the connection controller 121 of the second connection adapter 1b starts connection process to the radio packet communication network 40 (step S256). This connection process is the same as the connection process (step S102 to S107) described above referring to Fig. 7. Upon completion of the connection process to the radio packet communication network 40, the connection controller 121 of the second connection adapter 1b notifies the second high-level equipment 10b of the call arrival (step S257).

By the said processes, status of the first high-level equipment 10a and the second high-level equipment 10b turns to online on the radio packet communication network 40. Next, the connection controller 121 of the first connection adapter 1a establishes a TCP connection with the management computer 51 (step S258). Additionally the connection controller 121 of the second connection adapter 1b establishes a TCP connection with the management computer 51 (step S259). Then, the each communication controller 122 of the connection adapters 1a and 1b send datagram received from each of the high-level equipments 10a and 10b onto the TCP connection, and send datagram received from the TCP connection to each of the high-level equipments 10a and 10b. And the communication manager 55 of the management computer 51 relays data received from the first connection adapter 1a to the second connection adapter 1b, and relays data from the second connection adapter 1b to the first connection adapter 1a. This enables peer-to-peer tunnel communication between the high-level equipments 10a and 10b (step S260).

Although the present invention has been described in detail so far with respect to one embodiment thereof, the invention is not limited to this embodiment. For instance, in the above embodiments, predetermined IP addresses are assigned although dynamic IP address assignment protocol is used in the radio packet network 40. However, the invention can also be applied to a network in which random IP addresses are assigned.

Further, in the above embodiments, "non-procedure" protocol is used for the communication between the high-level equipments 10a and 10b, and this means that upper layer protocol can be used in the high-level equipment 10 side. Therefore any communication protocol can be used for the communication between the high-level equipments 10.

Further, the foregoing embodiment concerned a telemetering system for monitoring the sewage flow rate, the invention can also be applied to other telemetering systems and telematics systems as well.

Further, although the embodiments cited above are supposed to use communication modules of the CDMA standards by way of example, the invention can also be implemented with modules of other standards. Similarly, other interface standards than those cited above can also be applied on the high-level equipment side.

## Claims

1. A communication system that utilizes a network connection service which connects a LAN and a radio communication terminal via a radio packet communication network, wherein:
said radio communication terminal comprises a communication device for connecting to the radio packet communication network, high-level equipment performing communication by using the communication device and a connection adapter connecting the communication device and the high-level equipment;
said connection adapter comprises connection control means for controlling connection of the communication of the high-level equipment and communication control means for controlling relaying communication data of the high-level equipment;
a server for managing communication between a first radio communication terminal and a second radio communication terminal is arranged on the LAN side;
connection control means of a connection adapter of the first radio communication terminal, in case of communicating to the second radio communication terminal accommodated in the radio packet communication network, connects to the radio packet communication network and sends a communication request for the second radio communication terminal to the server;
upon receipt of the communication request, a communication management means of the server sends a calling message to the second communication terminal by using a messaging service provided in the radio packet communication network;
upon receipt of the calling message from the server, connection control means of a connection adapter of the second radio communication terminal connects to the radio packet communication network.

2. The communication system according to claim 1, wherein:
upon completion of the connection of said second radio communication terminal to the radio packet communication network, the connection control means of the connection adapters of the first and second radio communication terminals establish connection between both terminals and then perform peer-to-peer communication between the first and second radio communication terminals.

3. The communication system according to claim 1, wherein:
the connection control means of the connection adapter of the first radio communication terminal establishes connection to the server via the radio packet communication network after the connection to the radio packet communication network;
the connection control means of the connection adapter of the second radio communication terminal establishes connection to the server via the radio packet communication network after the connection to the radio packet communication network upon the receipt of the calling message;
the communication management means of the server relays communication data between the first and second radio communication terminals.
